Europäisches Patentamt

(19) European Patent Office

Office européen des brevets

(11) Numéro de publication : **0 056 545
B1**

(12) **FASCICULE DE BREVET EUROPÉEN**

(45) Date de publication du fascicule du brevet :
04.07.84

(51) Int. Cl.³ : **H 04 M   3/30, G 01 R 31/08**

(21) Numéro de dépôt : **81402024.4**

(22) Date de dépôt : **17.12.81**

(54) **Installation de localisation de coupures et de courts-circuits dans une ligne à deux conducteurs.**

(30) Priorité : **21.01.81 FR 8101050**

(43) Date de publication de la demande :
**28.07.82 Bulletin 82/30**

(45) Mention de la délivrance du brevet :
**04.07.84 Bulletin 84/27**

(84) Etats contractants désignés :
**DE GB SE**

(56) Documents cités :
**US-A- 4 054 759
NACHRICHTENTECHNISCHE ZEITSCHRIFT, no. 10,
1966 BERLIN (DE) E. BRAUN: "Überwachung und
Fehlerortung für Trägerfrequenz-Breitbandsysteme
auf Leitungen", pages 574/580**

(73) Titulaire : **Gabry, André
56, rue de Fontenay
F-92350 Le Plessis-Robinson (FR)**

**Gibault, Louis
132, avenue du Général de Gaulle
F-92130 Issy-Les-Moulineaux (FR)**

**Landrea, Denis
14 A, rue Paul Couderc
F-92330 Sceaux (FR)**

(72) Inventeur : **Gabry, André
56, rue de Fontenay
F-92350 Le Plessis-Robinson (FR)**
Inventeur : **Gibault, Louis
132, avenue du Général de Gaulle
F-92130 Issy-Les-Moulineaux (FR)**
Inventeur : **Landrea, Denis
14 A, rue Paul Couderc
F-92330 Sceaux (FR)**

(74) Mandataire : **Cabinet Martinet
62, rue des Mathurins
F-75008 Paris (FR)**

## Description

La présente invention concerne une installation de localisation de coupures et de courts-circuits par rapport à un quadripôle inséré entre des premier et second tronçons d'une ligne à deux conducteurs, l'autre extrémité du premier tronçon étant reliée sélectivement à des moyens d'alimentation pour appliquer sélectivement une tension entre les deux conducteurs supérieure à un premier seuil de tension et un courant circulant dans au moins l'un des conducteurs supérieur à un premier seuil de courant et étant également reliée sélectivement à des moyens pour détecter des première et seconde fréquences, ledit quadripôle comprenant des moyens de détection de tension en parallèle aux conducteurs de ligne pour transmettre sur la ligne un signal à la première fréquence modulant le courant en ligne en réponse à ladite tension appliquée et des moyens de détection de courant en série sur l'un des conducteurs de ligne pour transmettre sur la ligne un signal à la seconde fréquence modulant le courant en ligne en réponse audit courant appliqué.

Bien que l'invention ne soit pas limitée à ce type d'application, on se réfère dans la suite à la localisation de défauts dans une ligne téléphonique d'abonné à deux conducteurs qui relie un central téléphonique à une installation téléphonique d'abonné. Les défauts que l'installation localise sont de deux types. Le premier type est relatif à des coupures appelées également ruptures ou ouvertures de l'un des conducteurs de la ligne. Le second type est relatif à des courts-circuits appelés également boucles ou shunts à faible résistance entre les deux conducteurs de ligne ou entre l'un des conducteurs de ligne et la terre.

Dans les installations de localisation de ce type, les moyens d'alimentation sont inclus dans un appareil d'essai qui est utilisé pour localiser les défauts de ligne par rapport au quadripôle de test, après que ceux-ci aient été détectés par une table d'essai que tout central téléphonique possède. En fonction de la réponse du quadripôle soumis à la tension ou au courant appliqué, l'appareil d'essai permet de localiser un défaut dans le premier ou le second tronçon de la ligne par rapport au quadripôle. Par exemple, lorsque le second tronçon est court et à proximité de l'installation téléphonique d'abonné, la localisation d'un défaut permet de savoir si l'équipe d'entretien qui doit réparer la ligne est celle affectée au premier tronçon de ligne téléphonique du côté du central ou au second tronçon de ligne du côté de l'installation téléphonique. En effet, les compétences et l'outillage requis pour le dépannage de la ligne ou premier tronçon et de l'installation téléphonique d'abonné ou second tronçon sont différents. Par conséquent, la localisation d'un défaut peut, mieux que sa nature exacte, constituer un critère de décision pour le choix de l'équipe d'entretien à déplacer. Si le défaut est en ligne, l'équipe d'entretien est munie d'échelles et des équipements nécessaires pour descendre dans une chambre ou dans les égouts. Si le défaut est localisé chez l'abonné, l'équipe d'entretien doit avoir pris rendez-vous avec l'abonné.

Le US-A-4.054.759 décrit deux types de quadripôle pour tester une ligne téléphonique à deux conducteurs ou boucle d'abonné.

Le premier type de quadripôle comprend un oscillateur à relaxation et un premier contact d'un relais qui sont connectés en série entre les deux conducteurs de ligne. Des moyens de connexion incluent ledit relais et un second contact du relais qui sont connectés en série avec une diode entre les conducteurs de ligne.

Les moyens d'alimentation éloignés comprennent une source de tension continue sélectivement connectée à ladite autre borne du premier tronçon de ligne. L'un des conducteurs de ligne et l'une des bornes de la source de tension continue sont toujours mis à la terre, ce qui nécessite une polarisation prédéterminée du quadripôle de test. Cette exigence peut engendrer des erreurs de connexion du quadripôle nuisibles à son fonctionnement lors de l'insertion de celui-ci dans la ligne. Ce type de quadripôle de test est en fait destiné à des lignes téléphoniques particulières à certains pays, comme aux Etats-Unis, où les fils de ligne d'abonné, à savoir le fil de pointe (« tip-wire » ou « T-wire » en anglais, ou « a-Ader » en allemand) et le fil de nuque (« ring-wire » ou « R-wire » en anglais ou « b-Ader » en allemand), ont un rôle prédéterminé et ne peuvent pas être permutés. Un tel quadripôle de test ne peut donc pas être utilisé également pour les lignes d'abonnés dans lesquelles l'ordre des deux fils importe peu, comme celles du réseau téléphonique français.

Selon le premier type de quadripôle de test du US-A-4.054.759, lorsque le relais est alimenté sous une tension égale ou supérieure à la tension prédéterminée de la source d'alimentation éloignée, celui-ci ferme le premier contact afin que l'oscillateur à relaxation soit bouclé à travers la ligne entre le potentiel prédéterminé d'alimentation et la terre et module le courant de boucle d'abonné ; simultanément, l'équipement d'abonné qui est relié à l'autre extrémité du second tronçon de la ligne est déconnecté. La détection de la fréquence de modulation à l'extrémité d'essai éloignée indique l'absence d'une rupture dans le premier tronçon de la ligne.

Le second type de quadripôle de test selon le US-A-4.054.759 comprend également un relais qui commande des contacts et qui est interconnecté entre une borne de terre et la borne commune à deux circuits à diodes dont les autres bornes sont reliées respectivement aux conducteurs de ligne. Deux oscillateurs à relaxation sont inclus dans le quadripôle de test et fonctionnent à des fréquences différentes. Les bornes de chaque oscillateur sont reliées à ladite borne de terre et à l'un des conducteurs de ligne. Un tel quadripôle permet de tester séparément chacun des conducteurs de la ligne en appliquant un potentiel prédéterminé à l'extrémité éloignée du premier tronçon de ligne sur le conducteur respectif considéré. Si aucune rupture du conducteur considéré n'est présente, l'oscillateur à relaxation correspondant est traversé par le courant de ligne qu'il module et la fréquence de modulation respective est détectée à l'extrémité d'essai éloignée. Ce second type de quadripôle de test nécessite ainsi une terre. Le retour du signal de modulation par la terre a notamment pour inconvénient d'engendrer des phénomènes de diaphonie dans les lignes d'abonné voisines qui sont contenues dans un même câble. Cet inconvénient est difficilement compatible avec les essais réguliers préventifs de lignes d'abonné.

Cependant, l'un des inconvénients majeurs des quadripôles de test selon le US-A-4.054.759 est qu'ils comportent une borne de terre et ne peuvent pas indiquer des défauts d'isolement dans la ligne, tels que des courts-circuits entre les deux conducteurs de lignes ou entre l'un d'eux et la terre. En outre, l'emploi de relais et contacts empêche la réalisation des quadripôles sous forme de circuit intégré en vue d'en diminuer le coût de fabrication et l'encombrement.

D'autres quadripôles de test pour ligne d'abonné sont également divulgués par la FR-A-2.214.216. Chacun de ces quadripôles comprend également un relais qui, lorsqu'il est excité, commande deux contacts respectivement en série sur les conducteurs de la ligne afin de déconnecter l'équipement d'abonné et le second tronçon de ligne ; là encore, des défauts dans le second tronçon de ligne du côté de l'installation d'abonné ne sont pas pris en compte.

L'excitation des quadripôles de test selon la FR-A-2.214.216 nécessite une source d'alimentation alternative à une fréquence prédéterminée à l'extrémité éloignée d'essai. Le quadripôle qui comprend uniquement des moyens de détection de courant ou uniquement des moyens de détection de tension, doit inclure un circuit à inductance et capacité prédéterminées qui est accordé sur la fréquence prédéterminée. Cette exigence engendre diverses distorsions autour de la fréquence prédéterminée, notamment en ce qui concerne l'impédance, l'affaiblissement et le temps de propagation de groupe de la ligne, qui sont nuisibles aux signaux de données lorsque la ligne d'abonné est numérique. Etant donné que la plupart des lignes d'abonné actuelles sont destinées à court terme à transmettre des signaux numériques par modem, l'utilisation de ce type de quadripôle est très limitée.

Par ailleurs, les quadripôles selon la FR-A-2.214.216 comprennent, en tant que moyens de détection de courant ou de tension alternative, notamment un amplificateur passe-bande et une bascule de Schmitt pour exciter le relais, et un générateur à fréquence prédéterminée qui termine le premier tronçon de ligne lorsque le relais est excité en réponse au courant ou à la tension prédéterminé. Ces derniers composants nécessitent une alimentation locale qui peut être une pile, ce qui exige son changement périodique, ou une paire de fils auxiliaires qui peut être coupée accidentellement.

La présente invention a pour but de fournir une installation de localisation de coupures et courts-circuits dans une ligne à deux conducteurs s'affranchissant des inconvénients de l'art antérieur ci-dessus évoqués.

A cette fin, une installation selon le préambule de la revendication 1 est caractérisée en ce que les moyens de détection de tension comprennent des premiers moyens d'alimentation à une première tension en réponse à ladite tension appliquée, des premiers moyens pour osciller à la première fréquence suite à l'alimentation par les premiers moyens d'alimentation et des premiers moyens en série avec les premiers moyens d'alimentation pour moduler le courant traversant les moyens de détection de tension par le signal à la première fréquence délivré par les premiers moyens d'oscillation, et en ce que les moyens de détection de courant comprennent des seconds moyens d'alimentation à une seconde tension en réponse audit courant appliqué, des seconds moyens pour osciller à la seconde fréquence suite à l'alimentation par les seconds moyens d'alimentation et des seconds moyens en parallèle avec les seconds moyens d'alimentation pour moduler le courant traversant les moyens de détection de courant par le signal à la seconde fréquence délivré par les seconds moyens d'oscillation.

Un quadripôle de test, également appelé balise, selon l'invention, apporte les avantages suivants par rapport aux quadripôles de test connus commentés ci-dessus :

— possibilité de localiser non seulement des coupures mais également des courts-circuits entre les conducteurs de la ligne et des fuites à la terre par rapport à chacun des conducteurs ;

— aucune exigence de référence à la terre ;

— aucune alimentation locale : les moyens d'alimentation prélèvent leur énergie à partir de la tension ou du courant d'excitation appliquée ;

— l'ordre de connexion des conducteurs de ligne au quadripôle est indifférent : les croisements de conducteurs sont admis ;

— aucune déconnexion de l'équipement d'abonné reliée au second tronçon de ligne n'a lieu lors des localisations de défauts ;

— absence de relais et contacts correspondants ; le quadripôle de test peut être réalisé sous la forme d'un circuit intégré ;

— aucun phénomène de diaphonie n'est engendré dans les autres lignes d'abonné incluses dans le même câble ;

— transparence du quadripôle aux signaux numériques susceptibles d'être transmis par la ligne.

Les moyens d'alimentation pour tester la ligne selon l'invention appliquent des tensions élevées, de l'ordre de la centaine de Volts, qui testent les isolants entre fils. Grâce à la localisation des défauts et à la distinction entre défauts par détection de fréquences prédéterminées, plusieurs quadripôles de test selon l'invention peuvent être insérés dans la ligne et par suite, indiquent précisément l'endroit où le défaut doit être réparé à l'équipe d'entretien. Cette distinction peut être également réalisée en assignant des seuils de tension et/ou de courant caractéristiques dans les quadripôles qui émettent des signaux à mêmes premières et secondes fréquences. Dans ce cas, selon la valeur de la tension ou du courant appliqué l'opérateur au niveau de l'appareil d'essai déduit de la comparaison de la valeur appliquée avec celles auxquelles doivent répondre les quadripôles, la localisation du défaut.

Un quadripôle de test selon l'invention peut comporter deux moyens de détection de courant qui sont respectivement en série sur chaque conducteur de ligne. Ceux-ci permettent de distinguer notamment une mise à la terre franche entre l'un ou l'autre des conducteurs de ligne.

Selon un autre aspect de l'invention, les moyens de détection de courant comprennent entre leurs bornes des résistances déterminées et/ou des thermistances qui assurent pratiquement une valeur ohmique constante faible quel que soit le mode d'utilisation de la ligne. Un quadripôle de test selon l'invention peut donc être utilisé pour n'importe quel type de ligne à deux conducteurs de transmission actuelle, telle que celles qui ne supportent pas de courant continu en exploitation. Ces dernières lignes sont par exemple des lignes spécialisées ou des lignes de transmission de données. Plus généralement, un quadripôle de test selon l'invention peut être inséré dans toute ligne à deux conducteurs sans se préoccuper de l'usage de celle-ci. En particulier, les seuils de tension et de courant peuvent être choisis de sorte qu'ils conviennent à l'exploitation des lignes téléphoniques de tous les réseaux téléphoniques connus dont certaines caractéristiques diffèrent entre certains pays.

D'autres avantages de la présente invention apparaîtront plus clairement à la lecture de la description qui suit de plusieurs exemples de réalisation et des dessins annexés correspondants, dans lesquels :

la Figure 1 est un bloc-diagramme schématique d'une installation selon l'invention ;

la Figure 2 est un bloc-diagramme d'un quadripôle de test complet ou balise selon l'invention ;

la Figure 3 est un schéma détaillé du circuit de détection de tension d'un quadripôle de test selon une réalisation préférée ; et

la Figure 4 est un schéma détaillé du circuit de détection de courant d'un quadripôle de test selon une réalisation préférée.

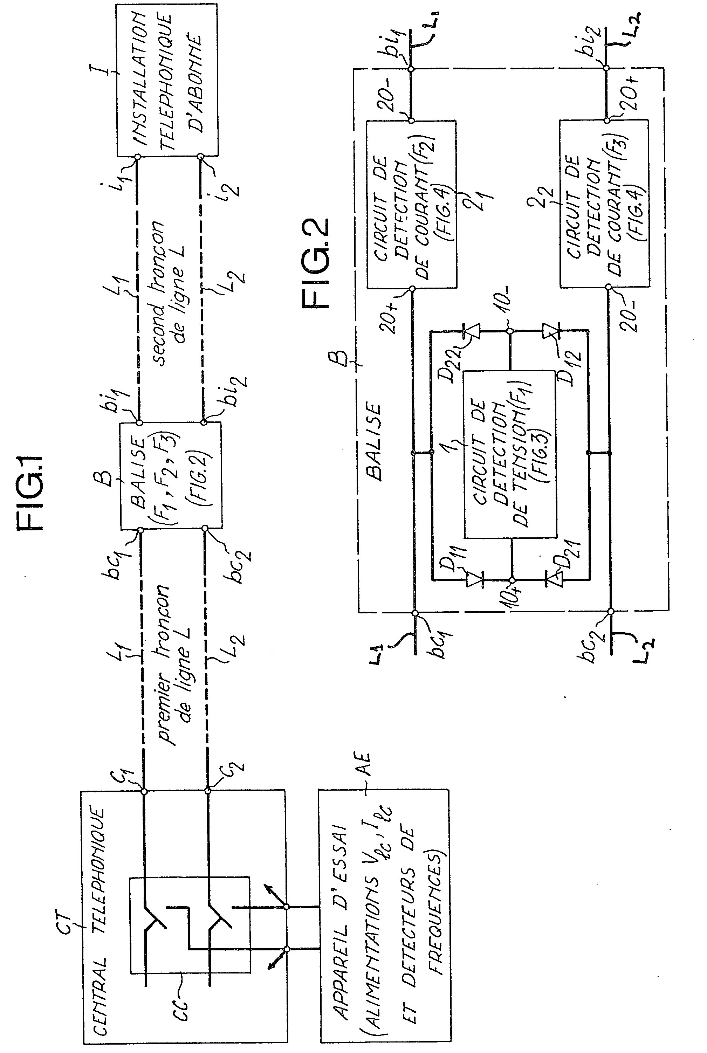

On a représenté à la Fig. 1 un exemple préféré de l'utilisation d'une balise de détection de coupures et de courts-circuits B conforme à l'invention. Cette utilisation a trait à la surveillance d'une ligne téléphonique d'abonné coaxiale ou à deux fils conducteurs $L_1$, $L_2$ dont des premières extrémités $c_1$, $c_2$ sont reliées au joncteur correspondant de l'autocommutateur d'un central téléphonique CT et dont des secondes extrémités $i_1$, $i_2$ sont reliées aux bornes d'entrée d'un poste téléphonique d'abonné, ou plus généralement, d'un circuit d'utilisation tel qu'une installation d'intercommunication d'abonné I à plusieurs postes téléphoniques privés.

La balise B est un quadripôle qui est inséré dans la ligne L, en général, à un endroit facilement accessible, tel qu'au point de raccordement de tronçons de ligne dans un puits souterrain ou au point de raccordement de la ligne à l'entrée de l'installation téléphonique de l'abonné. Elle partage donc la ligne L en deux tronçons. Le premier tronçon du côté du central CT est relié à des premières bornes $bc_1$ et $bc_2$ de la balise. Le second tronçon du côté de l'installation I est relié à des secondes bornes $bi_1$ et $bi_2$ de la balise qui sont respectivement assignées aux fils de ligne $L_1$ et $L_2$.

Au niveau des bornes d'extrémités $c_1$, $c_2$ du central CT, il est prévu un circuit de connexion CC classique du genre par exemple à relais qui permet, lors des essais de localisation des défauts de la ligne, de déconnecter la ligne L du central CT et de connecter un appareil d'essai AE à la ligne L. L'appareil AE est de préférence portable et coopère avec une table d'essai classique (non représenté) que tout central téléphonique possède. Cette table d'essai permet de sélectionner une ligne d'abonné desservie par le central téléphonique et de mesurer des paramètres déterminés tels que des potentiels étrangers sur les fils conducteurs de ligne, des résistances d'isolement ou d'effectuer des essais de continuité de ligne. L'appareil d'essai AE contient tous les moyens nécessaires pour exciter la balise et pour détecter les signaux émis par la balise, relativement aux deux types de défauts à localiser, à savoir une coupure ou ouverture de la ligne et un court-circuit ou une boucle de la ligne.

La Fig. 2 montre le bloc-diagramme général d'une réalisation préférée d'une balise complète B conforme à l'invention. Elle comprend essentiellement un circuit de détection de tension 1 et deux circuits de détection de courant $2_1$ et $2_2$.

Le circuit de détection de tension 1 a pour rôle de localiser les coupures en ligne. Ce circuit étant polarisé, il est inséré dans la branche médiane d'un pont redresseur qui comprend classiquement quatre diodes $D_{11}$, $D_{12}$, $D_{21}$ et $D_{22}$ et qui permet de l'affranchir du signe des tensions appliquées entre les fils de ligne $L_1$ et $L_2$ à partir de l'appareil d'essai AE ; en d'autres termes, l'ordre de connexion des fils de ligne à la balise importe peu. Pour une tension positive entre le premier fil $L_1$ et le second fil $L_2$, la diode $D_{11}$ qui est interconnectée au fil $L_1$ et à la borne positive $10^+$ du circuit 1, et la diode $D_{12}$, qui est interconnectée à la borne négative $10^-$ du circuit 1 et au fil $L_2$, sont passantes et les deux autres diodes $D_{21}$, $D_{22}$ sont bloquées. Réciproquement, la diode $D_{21}$ qui est interconnectée au second fil $L_2$ et à la borne positive $10^+$ et la diode $D_{22}$ qui est inter-

connectée à la borne négative $10^-$ et au premier fil $L_1$, sont passantes et les deux autres diodes $D_{11}$, $D_{12}$ sont bloquées lorsque le potentiel du fil $L_2$ est supérieur à celui du fil $L_1$.

Les circuits de détection de courant $2_1$, $2_2$ sont propres à localiser les courts-circuits en ligne. Chacun d'eux $2_1$, $2_2$ est en série sur l'un des fils conducteurs de ligne $L_1$, $L_2$, entre les bornes de la balise $bc_1$ et $bi_1$, $bi_2$ et $bc_2$, respectivement, et localise les courts-circuits sur le fil de ligne correspondant $L_1$, $L_2$, tels que la mise à la terre franche de ce fil ou la mise au contact de ce fil avec une source de tension parasite.

On notera que des balises qui comportent un circuit de détection de tension 1 avec pont redresseur conforme à l'invention et un ou deux circuits de détection de courant $2_1$, $2_2$ conformes à l'invention, appartiennent au domaine de l'invention.

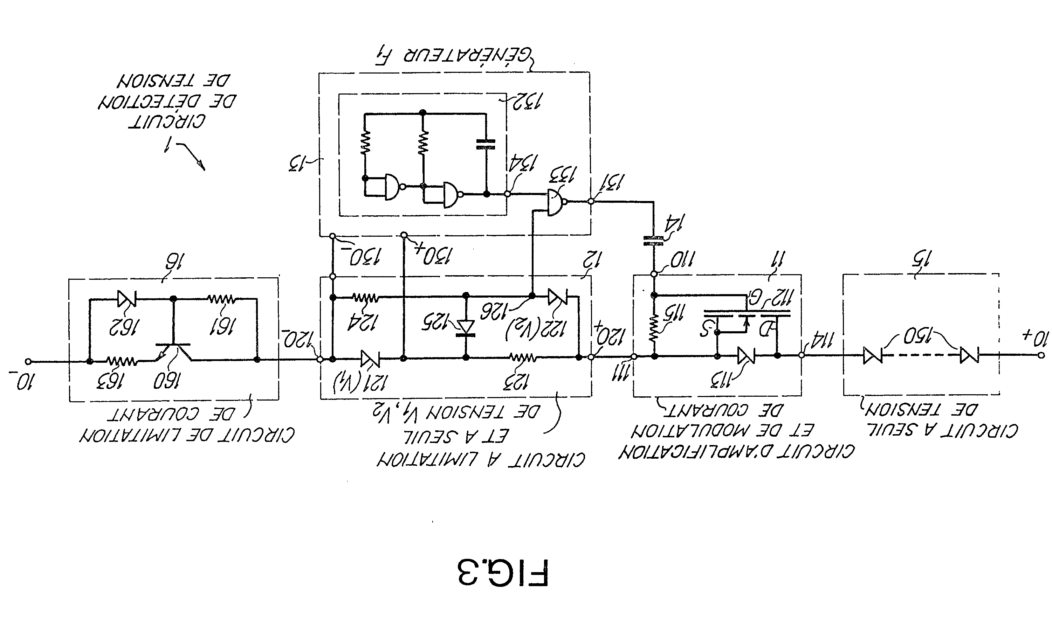

En se référant à la Fig. 3, on décrit une réalisation préférée du circuit de détection de tension 1. Il comprend en particulier un circuit d'amplification et de modulation de courant 11, un circuit à limitation et à seuil de tension 12 et un générateur d'une première fréquence 13. Le circuit 12 joue le rôle de source de tension pour le générateur 13. Les circuits 11 et 12 sont en série entre les bornes $10_+$ et $10_-$ du circuit de détection de tension 1.

Le circuit à limitation et à seuil de tension 12 est composé de premier et second circuits de stabilisation de tension, qui sont en parallèle entre les bornes positive $120_+$ et négative $120_-$ du circuit 12. Les circuits de stabilisation comprennent chacun une diode de Zener 121, 122 et une résistance 123, 124 en série et ont en commun une diode 125 dans la branche médiane du circuit 12. La borne $120_+$ est reliée à la cathode de la diode de Zener 122 et à une borne de la résistance 123. La borne $120_-$ est reliée à l'anode de la diode de Zener 121 et à une borne de la résistance 124.

Le générateur de fréquence 13 est constitué par un oscillateur classique 132, tel qu'un multivibrateur qui oscille à la première fréquence $F_1$, et par une porte NON-ET 133. Une entrée de la porte 133 est reliée à la sortie 134 de l'oscillateur 132. L'autre entrée dite de commande de la porte 133 est reliée en 126 aux anodes de la diode de Zener 122 et de la diode commune 125 et à l'autre borne de la résistance 124. Les bornes d'alimentation positive $130_+$ et négative $130_-$ du générateur 13 sont branchées entre la cathode et l'anode de la diode de Zener 121. La cathode de la diode 121 est reliée à l'autre borne de la résistance 123 et à la cathode de la diode commune 125.

La diode de Zener 121 du premier circuit de stabilisation de tension impose une première limitation de tension $V_1$ pour l'alimentation du générateur de fréquence 13. Pour des tensions d'alimentation inférieure à $V_1$, l'oscillateur 132 est instable. La diode de Zener 122 du second circuit de stabilisation de tension impose une seconde limitation de tension $V_2$ qui contribue à l'ouverture de la porte 133 lorsque l'oscillateur 132 est stable afin que la sortie 131 transmette le signal à première fréquence $F_1$ vers la borne de commande 110 du circuit 11 à travers un circuit de couplage. Ce circuit de couplage peut être un condensateur 14, typiquement de capacité égale à 10 nF, comme illustré à la Fig. 3, ou un circuit d'isolation électrique (non représenté) du genre cellule optoélectronique, par exemple à diode électroluminescente et à élément photosensible à jonction.

Lors de la localisation de coupures, une tension dite de localisation de coupure $V_{1c}$ est appliquée aux premières bornes $c_1$, $c_2$ de la ligne L par une source de tension qui est contenue dans l'appareil d'essai AE et qui est de préférence ajustable. Lorsque le potentiel de la borne $10_+$ du circuit de détection de tension 1 croît, un faible courant traverse d'abord le circuit 12 et l'oscillateur 132 est instable. Puis, la porte 133 restant fermée, l'oscillateur 132 devient stable et oscille à la première fréquence $F_1$ dès que la tension aux bornes de la diode de Zener 121 atteint le seuil $V_1$. Enfin, après une augmentation de l'ordre du Volt, la porte 133 s'ouvre suite à un potentiel suffisant au point de connexion 126, ce qui permet de transmettre le signal à première fréquence $F_1$ de l'oscillateur 132 vers la borne 110 du circuit 11. La diode commune 125 permet de limiter l'accroissement du potentiel en 126 au potentiel positif d'alimentation du générateur 13 et contribue à protéger la porte 133 contre toute tension élevée par le passage obligé du courant de la diode de Zener 122 vers la diode de Zener 121 à travers la diode 125. Ainsi la porte 133 est ouverte dès que la tension appliquée $V_{1c}$ est égale à la somme des tensions de seuils des diodes 122, 125 et 131 et des tensions de seuils des autres circuits 15, 11 et 16 qui composent le circuit 1 et qui seront décrits ci-après. Selon un exemple de réalisation, les tensions de seuil $V_1$, $V_2$ des diodes de Zener 121 et 122 sont égales à 5,1 Volts et 3,3 Volts et la valeur ohmique des résistances 123 et 124 est égale à 500 Ohms.

Le circuit d'amplification et de modulation de courant 11 a deux fonctions. La première est l'amplification du signal à première fréquence $F_1$ reçu à sa borne de commande 110 et est assurée par un transistor 112. La seconde est la modulation par le signal de tension $F_1$ du courant qui traverse le circuit de détection de tension 1 de la borne $10_+$ vers la borne $10_-$.

Le transistor 112 est par exemple un transistor MOS à enrichissement et à canal à conductivité du type N dont la grille G est commandée par le signal de fréquence $F_1$ reçu à la borne 110. Dans le circuit 11, la modulation d'amplitude tension-courant s'effectue au moyen du court-circuitage d'une diode de Zener 113 qui est insérée entre le drain D et la source S du transistor 112. Le drain et la source constituent respectivement l'entrée 114 et la sortie 111 du circuit 11 qui est reliée à la borne $120_+$ du circuit 12. La tension de seuil de la diode de Zener 113, par exemple égale à 24 Volts, impose l'amplitude désirée du signal à la fréquence $F_1$ délivré par le circuit 1. Le circuit 11 comprend également une résistance de polarisation 115 à valeur résistive élevée de l'ordre de 100 kOhms qui est interconnectée à la grille G, ou borne 110, et à la source S, ou borne 111, du transistor 112.

Le circuit de détection de tension 1, comprend également deux circuits 15 et 16 qui ont pour rôles, respectivement, d'isoler l'ensemble des circuits 11 et 12 et d'interdire le passage d'un courant en service d'exploitation normal tant que la tension appliquée aux bornes $10_+$ et $10_-$ est inférieure à un seuil de tension $VS_1$ et de protéger le circuit 1 contre les courants élevés. Ils déterminent la tension d'essai qu'on voudra appliquer à la ligne.

Le circuit à seuil de tension 15 rend transparente la balise en exploitation normale. Il peut comprendre, comme montré à la Fig. 3, une série de diodes de Zener 150 entre les bornes $10_+$ et 114 qui ont chacune une tension de seuil égale à 24 Volts. Les diodes de Zener 150 peuvent être au nombre de sept par exemple afin d'assurer en toutes circonstances une résistance en parallèle nettement plus élevée que celle de la ligne L lors de l'exploitation de celle-ci.

Le circuit de limitation de courant 16 sert de protection contre les courants excessifs et est analogue à un régulateur-suiveur de tension. Il comporte un transistor à jonction NPN 160 ayant une tension de claquage élevée. Son circuit de stabilisation de tension de base comporte une résistance de base 161, dont l'autre borne est reliée au collecteur du transistor 160 et à la borne $120_-$ du circuit 12, et une diode de Zener 162 qui a une tension de seuil par exemple égale à 39 Volts et qui limite l'amplitude du courant traversant le circuit 1. L'émetteur du transistor 160 est relié à la borne $10_-$ et à l'anode de la diode de Zener 162 à travers une résistance d'émetteur 163 de l'ordre de 3 kOhms.

Pour les valeurs numériques des composants du circuit 1 indiquées ci-dessus, la variation de la tension de localisation de coupure appliquée $V_{1c}$ est telle que, pour $V_{1c} < VS_1 \simeq 180$ Volts, aucun courant ne passe entre les bornes $10_+$ et $10_-$ et, pour $V_{1c} > VS_2 \simeq 230$ Volts, le signal à première fréquence $F_1$ est appliqué par l'oscillateur 132 à la borne 110 du circuit 11 et module le courant traversant le circuit 1. Les composants de l'oscillateur 132 sont choisis pour une oscillation à une fréquence $F_1 \simeq 9,8$ kHz par exemple.

Le fonctionnement du circuit de détection de tension 1 est le suivant.

Tant que la tension appliquée aux bornes de la balise, c'est-à-dire aux bornes $10_+$ et $10_-$ du circuit 1, est inférieure à la tension de seuil $VS_1$ ce qui correspond au cas notamment où la ligne téléphonique L est en exploitation, le circuit 1 est équivalent à une résistance très élevée et aucun courant ne le traverse.

Si la tension entre $10_+$ et $10_-$ est comprise entre $VS_1$ et $VS_2$, un courant très faible de l'ordre de quelques mA traverse le circuit 1 et aucune émission de signal à fréquence $F_1$ n'est constatée. L'oscillateur 132 oscille à la fréquence $F_1$ mais ne transmet pas de signal car la porte NON-ET 133 est fermée.

Dès que la tension aux bornes $10_+$ et $10_-$ a atteint $VS_2$, la porte 133 est ouverte et applique le signal de tension de commande à la fréquence $F_1$ à la grille G du transistor 112. Du fait que la diode de Zener 113 est shuntée par le transistor passant 112, le courant augmente de quelques milliampères. Lorsque la tension aux bornes $10_+$ et $10_-$ augmente à partir de $VS_2$, le courant croît mais cependant sans dépasser une valeur maximale imposée par le circuit de limitation de courant 16.

Lors de la procédure de la télélocalisation d'une coupure dans la ligne L, il faut donc que la tension $V_{1c}$ appliquée par l'appareil d'essai AE soit supérieure à $VS_2$.

En se reportant à la Fig. 1, si aucune coupure n'existe sur le premier tronçon de ligne entre les bornes $c_1$ et $bc_1$ et les bornes $bc_2$ et $c_2$, la tension $V_{1c}$ est appliquée aux bornes $10_+$ et $10_-$ du circuit 1 qui émettra le signal à première fréquence $F_1$. Un détecteur inclus dans l'appareil AE et accordé à la fréquence $F_1$ détecte alors ce signal et signale à l'opérateur, par exemple au moyen de l'illumination d'une diode électroluminescente que la coupure est localisée dans le second tronçon de ligne entre les bornes $bi_1$, $bi_2$ et $i_1$, $i_2$ ou dans l'installation téléphonique I. On notera que la détection de fréquence dans l'appareil AE peut être réalisée par l'écoute du signal $F_1$ au moyen d'un haut-parleur.

Réciproquement, si une coupure existe dans l'un des fils de ligne du premier tronçon, le circuit 1 n'est pas soumis à la tension $V_{1c}$. Aucun signal $F_1$ ne sera détecté, ce qui indique que la coupure n'est pas localisée dans le second tronçon de ligne.

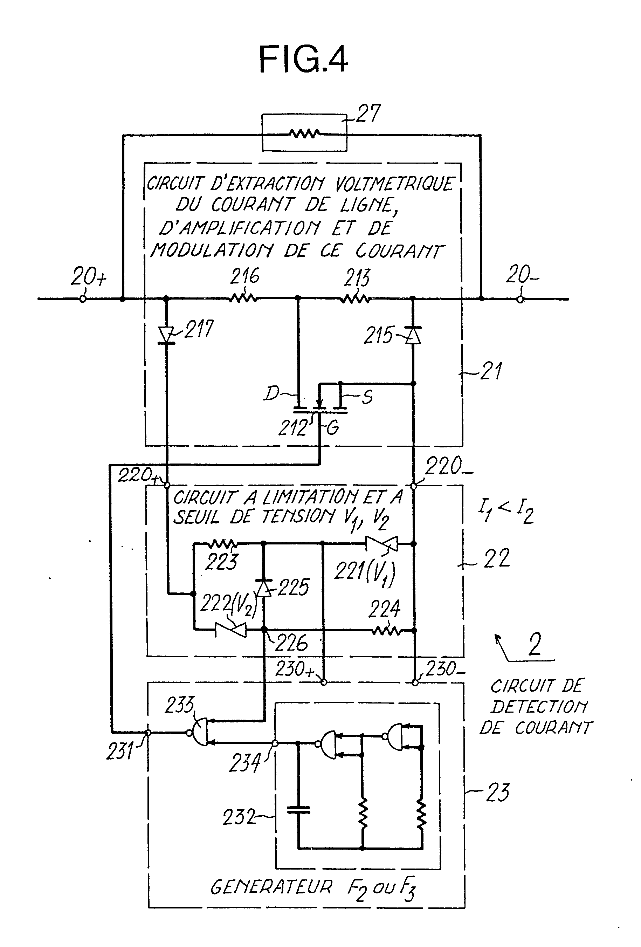

Un circuit de détection de courant 2 en série sur un fil de ligne L est illustré selon une réalisation préférée à la Fig. 4. Il comprend un circuit d'extraction voltmétrique du courant de ligne, d'amplification et de modulation de ce courant 21, un circuit à limitation et à seuil de tension 22 et un générateur d'une seconde fréquence 23.

Les agencements des composants des circuits 22 et 23 sont identiques à ceux des circuits 12 et 13 du circuit de détection de tension 1 montré à la Fig. 3. Chaque composant des circuits 22 et 23 est repéré dans la Fig. 4 par des numéros de référence ayant le chiffre des unités qui est égal à celui du composant correspondant des circuits 12 et 13 de la Fig. 3.

Le circuit à limitation et à seuil de tension 22 présente également des premier et second seuils de tension qui correspondent, pour la détection du courant dans le circuit 2, à des premier et second seuils de courant $IS_1$ et $IS_2$ tels que $IS_1 < IS_2$. Il comprend, entre sa borne d'entrée positive $220_+$ et sa borne de sortie négative $220_-$, un premier circuit de stabilisation qui impose la limitation de tension $V_1$ et un second circuit de stabilisation qui impose la limitation de tension $V_2$. Le premier circuit de stabilisation est composé d'une diode de Zener 221 et d'une résistance 223 qui ont respectivement les mêmes fonctions que les composants 121 et 123 du circuit 12. Le second circuit de stabilisation est composé d'une diode de Zener 222 et d'une résistance 224 qui ont respectivement les mêmes fonctions que les composants 122 et 124 du circuit 12. La diode 225 commune aux circuits de stabilisation et insérée dans la branche médiane du circuit 22 évite que la tension en 226 ne devienne plus élevée que la tension en $230_+$. La cathode et l'anode de la diode de Zener 221 sont reliées respectivement aux bornes d'alimentation positive $230_+$ et négative $230_-$ de l'oscillateur 232, du genre multivibrateur, du générateur 23. Une porte NON-ET 233 est incluse dans le générateur 23 d'une manière analogue à celle 133 du générateur 13 (Fig. 3). En d'autres termes, l'une des entrées de la porte 233 est reliée au point de connexion commun 226 des anodes des diodes 222 et 225 et à une borne de la résistance 224 et l'autre entrée de la porte 233 est reliée à la sortie 234 de l'oscillateur 232.

Le circuit de détection de courant 2 comprend également le circuit d'amplification et de modulation 21 qui joue le même rôle que le circuit 11 du circuit 1 et qui comprend, comme celui-ci, un transistor 212, tel qu'un transistor MOS à enrichissement et à canal de conductivité du type N. Les autres composants du circuit 21 et leurs agencements sont différents de ceux du circuit 11.

Comme montré à la Fig. 4, le circuit d'amplification et de modulation 21 comprend, entre ses bornes d'entrée positive $20_+$ et de sortie négative $20_-$ qui constituent celles du circuit 2, deux résistances en série 216 et 213. La seconde résistance 213 est interconnectée au drain D du transistor 212 et, à travers une diode 215, à la source S du transistor 212 et, par conséquent, est shuntée par ce transistor 212. La grille G du transistor 212 peut être reliée directement à la sortie 231 de la porte NON-ET 233. Le circuit 21 comprend également une diode 217 qui est passante de la borne positive $20_+$ à la borne d'entrée $220_+$ du circuit 22, et la diode 215 qui est passante de la borne de sortie $220_-$ du circuit 22 à la borne négative $20_-$. Ces deux diodes 217 et 215 protègent le circuit 22, propre à l'alimentation du générateur 23, contre l'application d'un courant en sens contraire, c'est-à-dire de la borne négative $20_-$ vers la borne positive $20_+$.

Selon une réalisation préférée, les composants des circuits 12 et 22 peuvent être respectivement identiques afin de limiter les coûts de fabrication de la balise B. Cependant, les oscillateurs 132 et 232, bien qu'ils puissent avoir des structures identiques, comprennent des composants ayant des caractéristiques différentes afin que les première et seconde fréquences, $F_1$ et $F_2$, soient différentes et que la détection en fréquence des signaux émis par les circuits 1 et 2 permettent de distinguer une coupure et un court-circuit en ligne au niveau de l'appareil d'essai AE (Fig. 1). Cet appareil peut donc comprendre un circuit de détection accordé à la seconde fréquence $F_2$ ou un circuit de détection commun dont la bande de fréquence comprend au moins les deux fréquences $F_1$ et $F_2$, tel que l'écouteur du combiné d'un poste téléphonique usuel. La seconde fréquence $F_2$ est par exemple égale à 8,3 kHz.

Dans le circuit d'amplification et de modulation 21, la somme des valeurs ohmiques des résistances 216 et 213 est telle que, insérée en série sur le fil de ligne correspondant, elle soit suffisamment faible pour ne perturber le fonctionnement normal du circuit d'utilisation, tel que l'installation téléphonique I. Selon une réalisation préférée, les résistances 216 et 213 ont pour valeurs ohmiques 33 Ohms et 12 Ohms. La limitation de tension $V_1$ rend stables les oscillations dans l'oscillateur 232 et le seuil de tension $V_2$ retarde le passage du signal à seconde fréquence $F_2$ vers la grille G du transistor 212 tant que la stabilité de l'oscillateur 232 n'est pas obtenue. Les tensions $V_1$ et $V_2$ étant effectives et un accroissement complémentaire de la tension en 226 ayant été obtenu par accroissement du courant d'essai appliqué entre $20_+$ et $20_-$, la porte 233 peut alors être débloquée et par suite permettre la modulation du courant appliqué par le transistor 212 shuntant la résistance 213. La valeur minimale de courant $IS_2$ correspondant à la valeur minimale du courant continu $I_{1c}$ appliqué par la source de tension ajustable de l'appareil d'essai AE est alors atteinte pour que des localisations de courts-circuits soient réalisées. Elle dépend de la résistance de la ligne L, de l'ordre du kOHm pour une ligne téléphonique.

En se reportant à la Fig. 1, la localisation d'un court-circuit ou boucle de ligne par rapport à la balise B est réalisée de la manière suivante. L'appareil d'essai AE applique un courant continu égal ou généralement supérieur au courant minimal précité.

Si le court-circuit est au-delà de la balise B, c'est-à-dire dans le second tronçon de ligne $bi_1$-$bi_2$ à $i_1$-$i_2$ ou dans le circuit d'utilisation I, le courant traverse le circuit de détection de courant 2 et excite le générateur de seconde fréquence 23. Le signal à la seconde fréquence $F_2$ est détecté dans l'appareil AE.

Au contraire, si aucun courant ne traverse le circuit 2 et n'excite l'émission de signal à seconde fréquence $F_2$ par le générateur 23, l'appareil d'essai AE ne détectera aucun signal. Ceci correspond à un court-circuit dans le premier tronçon de ligne, entre les bornes $c_1$, $c_2$ du circuit de commutation CC et les bornes $bc_1$, $bc_2$ de la balise B.

Selon une autre variante du circuit de détection de courant 2, celui-ci comprend, comme montré à la Fig. 4, une thermistance à semi-conducteurs 27 qui est interconnectée entre ses bornes $20_+$ et $20_-$ et qui est donc en parallèle aux résistances en série 216 et 213. Cette thermistance est une résistance à coefficient de température positif (CTP) connue, en céramique ferro-électrique semi-conductrice. Sa caractéristique, résistance en fonction de la température, présente un seuil de basculement à valeur ohmique entre la plage à coefficient de température négatif faiblement décroissant et la plage à coefficient de température positif fortement croissant qui correspond à un courant supérieur aux valeurs des courants de boucle (ou de fermeture) de ligne rencontrées en exploitation. Ainsi, en l'absence de procédure de localisation, la thermistance 27 court-circuite le circuit d'amplification et de modulation 21 et le circuit d'alimentation 22 et corollairement impose une chute de tension en exploitation comparativement à la réalisation précédente. En outre, en présence de cette thermistance, les résistances 216 et 213 peuvent avoir des valeurs ohmiques élevées, ce qui permet de diminuer le courant appliqué par l'appareil d'essai AE lors des localisations de courts-circuits.

Selon d'autres variantes, l'une des résistances 216 et 213 ou même les deux peuvent être remplacées par des résistances à coefficient de température positif, telles que celle définie ci-dessus.

Comme déjà dit, une balise complète selon l'invention comporte deux circuits de détection de courant $2_1$ et $2_2$ en série sur les fils de ligne $L_1$, $L_2$. Afin de distinguer les courts-circuits par mise à la terre franche des fils $L_1$, $L_2$, les circuits $2_1$ et $2_2$ émettent des seconde et troisième fréquences $F_2$, $F_3$ qui sont différentes.

Une installation de localisation selon l'invention comporte en général plusieurs balises B, en proportion avec la longueur de la ligne et des endroits d'accessibilité de celle-ci. Afin de distinguer les localisations de défauts dans les tronçons de ligne interconnectés entre les balises, les fréquences $F_1$, $F_2$, $F_3$ de chaque balise et/ou les seuils de tension $VS_2$ et de courant $IS_2$ sont différents.

Par exemple, dans une ligne téléphonique d'abonné peuvent être introduites au moins deux balises. Une première balise est située à proximité du central et une seconde balise est située à proximité de l'installation téléphonique d'abonné. L'interprétation des détections des diverses fréquences ou d'une même fréquence en fonction de la tension appliquée par l'appareil d'essai AE suit le même raisonnement pour une coupure ou un court-circuit. Si la première balise ne répond pas correctement, le défaut est localisé au niveau du central. Si la première balise répond normalement et la seconde balise n'émet aucun signal, le défaut est localisé dans la ligne. Enfin, si les deux balises répondent correctement, le défaut est localisé dans l'installation téléphonique d'abonné.

Par ailleurs, bien que l'invention ait été décrite en référence à une installation de localisation de défauts dans un circuit téléphonique d'abonné, les principes de fonctionnement de l'installation conforme à l'invention peuvent s'appliquer à la localisation de défauts dans d'autres circuits, du genre comportant une ligne bifilaire dont une extrémité est reliée à un circuit électronique, tel qu'un appareil de mesure, un appareil d'enregistrement de données ou analogues, qui est, par exemple, télécommandé à partir d'un poste central à travers la ligne.

En particulier, entrent dans le cadre de l'invention des installations telles que celle décrite ci-dessus pour la localisation de défauts sur toute ligne bifilaire du genre téléphonique, TELEX ou spécialisée, quel que soit le circuit d'utilisation desservi par la ligne.

**Revendications**

1. Installation de localisation de coupures et de courts-circuits par rapport à un quadripôle (B) inséré entre des premier et second tronçons (c-bc ; bi-i) d'une ligne (L) à deux conducteurs ($L_1$, $L_2$), l'autre extrémité (c) du premier tronçon étant reliée sélectivement à des moyens d'alimentation (AE) pour appliquer sélectivement une tension entre les deux conducteurs supérieure à un premier seuil de tension ($VS_1$) et un courant circulant dans au moins l'un des conducteurs supérieur à un premier seuil de courant ($IS_1$) et étant également reliée sélectivement à des moyens (AE) pour détecter des première et seconde fréquences ($F_1$, $F_2$), ledit quadripôle (B) comprenant des moyens de détection de tension (1) en parallèle aux conducteurs de ligne ($L_1$, $L_2$) pour transmettre sur la ligne (L) un signal à la première fréquence ($F_1$) modulant le courant en ligne en réponse à ladite tension appliquée et des moyens de détection de courant (2) en série sur l'un des conducteurs de ligne ($L_1$) pour transmettre sur la ligne (L) un signal à la seconde fréquence ($F_2$) modulant le courant en ligne en réponse audit courant appliqué, caractérisé en ce que les moyens de détection de tension (1) comprennent des premiers moyens d'alimentation (12) à une première tension ($V_1$) en réponse à ladite tension appliquée, des premiers moyens (13) pour osciller à la première fréquence ($F_1$) suite à l'alimentation par les premiers moyens d'alimentation (12) et des premiers moyens (11) en série avec les premiers moyens d'alimentation (12) pour moduler le courant traversant les moyens de détection de tension (1) par le signal à la première fréquence ($F_1$) délivré par les premiers moyens d'oscillation (13), et en ce que les moyens de détection de courant (2) comprennent des seconds moyens d'alimentation (22) à une seconde tension ($V_1$) en réponse audit courant appliqué, des seconds moyens (23) pour osciller à la seconde fréquence ($F_2$) suite à l'alimentation par les seconds moyens d'alimentation (22) et des seconds moyens (21) en parallèle avec les seconds moyens d'alimentation (22) pour moduler le courant traversant les moyens de détection de courant (2) par le signal à la seconde fréquence ($F_2$) délivré par les seconds moyens d'oscillation (23).

2. Installation conforme à la revendication 1, caractérisé en ce que les premiers moyens d'alimentation (12) comprennent une première diode de Zener (121) qui est interconnectée aux bornes d'alimentation (130) des premiers moyens d'oscillation (13) et en série avec une première résistance (123).

3. Installation conforme à la revendication 1 ou 2, caractérisée en ce que les premiers moyens d'alimentation (12) commandent, après l'alimentation des premiers moyens d'oscillation (13), l'ouverture d'une porte logique (133) pour transférer le signal à la première fréquence ($F_1$) vers les premiers moyens de modulation de courant (11) en réponse à une tension appliquée supérieure à un second seuil de tension ($VS_2$), lesdits premiers moyens d'oscillation (13) oscillant à la première fréquence ($F_1$) lorsque la tension appliquée est supérieure au premier seuil de tension ($VS_1$), lequel est inférieur au second seuil de tension ($VS_2$).

4. Installation conforme aux revendications 2 et 3, caractérisée en ce que les premiers moyens d'alimentation (12) comprennent en série une seconde diode de Zener (122) et une seconde résistance (124) qui sont en parallèle avec les premières diode de Zener et résistance (121, 123), et une simple diode (125) dont l'anode est reliée à l'anode de la seconde diode de Zener (122) et à l'entrée de commande (126) de la porte logique (133) et dont la cathode est reliée à la cathode de la première diode de Zener (121).

5. Installation conforme à l'une des revendications 1 à 4, caractérisée en ce que les premiers moyens d'oscillation (13) comprennent un multivibrateur (132) propre à osciller à ladite première fréquence ($F_1$).

6. Installation conforme à l'une des revendications 1 à 5, caractérisée en ce que les premiers moyens de modulation de courant (11) comprennent un transistor (112) dont l'électrode de commande (G) reçoit le signal à la première fréquence ($F_1$) et dont les deux autres électrodes (D, S) court-circuitent une diode de Zener (113) en série avec les premiers moyens d'alimentation (12).

7. Installation conforme à la revendication 6, caractérisée en ce que ledit transistor (112) est un transistor MOS à enrichissement et à canal de conductivité du type N.

8. Installation conforme à l'une des revendications 1 à 7, caractérisée en ce que la sortie (131) des premiers moyens d'oscillation (13) et l'entrée de commande des premiers moyens de modulation de courant (11) sont couplées par un condensateur ou un coupleur opto-électronique (14).

9. Installation conforme à l'une des revendications 1 à 8, caractérisée en ce que les moyens de détection de tension (1) comprennent des diodes de Zener (15) en série entre leurs bornes ($10_+$, $10_-$).

10. Installation conforme à l'une des revendications 1 à 9, caractérisée en ce que les moyens de détection de tension (1) comprennent en série entre leurs bornes ($10_+$, $10_-$) des moyens de limitation de courant à un seuil de courant prédéterminé (16).

11. Installation conforme à la revendication 10, caractérisée en ce que les moyens de limitation de courant (16) comprennent en série entre leurs bornes ($120_-$, $10_-$) une résistance (161) et une diode de Zener (162) qui ont une borne reliée à l'électrode de commande d'un transistor (160) dont les deux autres électrodes sont reliées directement et à travers une résistance (163) aux bornes ($120_-$, $10_-$) des moyens de limitation de courant (16).

12. Installation conforme à l'une des revendications 1 à 11, caractérisée en ce que les moyens de détection de tension (1) sont insérés dans la branche médiane d'un pont redresseur à diodes ($D_{11}$, $D_{22}$, $D_{21}$, $D_{12}$).

13. Installation conforme à l'une des revendications 1 à 12, caractérisée en ce que les seconds moyens d'alimentation (22) comprennent une troisième diode de Zener (221) qui est interconnectée aux bornes d'alimentation (230) des seconds moyens d'oscillation (23) et en série avec une troisième résistance (223).

14. Installation conforme à la revendication 12 ou 13, caractérisée en ce que les seconds moyens d'alimentation (22) commandent, après l'alimentation des seconds moyens d'oscillation (23), l'ouverture d'une seconde porte logique (233) pour transférer le signal à la seconde fréquence ($F_2$) vers les seconds moyens de modulation de courant (21) en réponse à un courant appliqué supérieur à un second seuil de courant ($IS_2$), lesdits seconds moyens d'oscillation (23) oscillant à la seconde fréquence ($F_2$) lorsque le courant appliqué est supérieur au premier seuil de courant ($IS_1$) lequel est inférieur au second seuil de courant ($IS_2$).

15. Installation conforme aux revendications 13 et 14, caractérisée en ce que dans les seconds moyens d'alimentation (22) sont prévus en série une quatrième diode de Zener (222) et une quatrième résistance (224) qui sont en parallèle avec les troisièmes diodes de Zener et résistance (221, 223), et une simple diode (225) dont l'anode est reliée à l'anode de la quatrième diode de Zener (222) et à l'entrée de la commande (226) de la seconde porte logique (233) et dont la cathode est reliée à la cathode de la troisième diode de Zener (221).

16. Installation conforme à l'une des revendications 1 à 15, caractérisée en ce que les seconds moyens d'oscillation (23) comprennent un multivibrateur (232) propre à osciller à ladite seconde fréquence ($F_2$).

17. Installation conforme à l'une des revendications 1 à 16, caractérisée en ce que les bornes (220) des seconds moyens d'alimentation (22) sont reliées aux bornes positive et négative (20) des moyens de détection de courant (2) à travers deux diodes (217, 215) respectivement.

18. Installation conforme à l'une des revendications 1 à 17, caractérisée en ce que les seconds moyens de modulation de courant (21) comprennent un transistor (212) dont l'électrode de commande (G) reçoit le signal à la seconde fréquence ($F_2$) et dont les deux autres électrodes (D, S) court-circuitent une résistance (213) entre les bornes (20) des moyens de détection de courant (2).

19. Installation conforme aux revendications 17 et 18, caractérisée en ce que la diode (215) qui est reliée à la borne négative ($20_-$) des moyens de détection de courant (2) est interconnectée à la résistance de court-circuitage (213) et à l'électrode négative du transistor (212) des seconds moyens de modulation de courant (21).

20. Installation conforme à la revendication 18 ou 19, caractérisée en ce que le transistor (212) des seconds moyens de modulation de courant (21) est un transistor MOS à enrichissement et à canal de conductivité du type N.

21. Installation conforme à l'une des revendications 18 à 20, caractérisée en ce que les seconds moyens de modulation de courant (21) comprennent une autre résistance (216) en série avec la résistance de court-circuitage (213) entre les bornes (20) des moyens de détection de courant (2).

22. Installation conforme à l'une des revendications 1 à 21, caractérisée en ce qu'une résistance (27) à coefficient de température positif est insérée entre les bornes $(20_+, 20_-)$ des moyens de détection de courant (2).

23. Installation conforme à l'une des revendications 18 à 21, caractérisée en ce qu'au moins l'une des résistances (213, 216) des seconds moyens de modulation de courant (21) est une résistance à coefficient de température positif.

24. Installation conforme à l'une des revendications 1 à 23, caractérisée en ce que ledit quadripôle (B) comprend des seconds moyens de détection de courant $(2_2)$ en série sur l'autre conducteur de ligne $(L_2)$ dont les composants et leur agencement sont analogues à ceux des premiers moyens de détection de courant $(2_1)$ définis dans l'une des revendications 1 et 13 à 23.

25. Installation conforme à la revendication 24, caractérisée en ce que les fréquences $(F_2, F_3)$ des signaux délivrés par les moyens d'oscillation (23) des premiers et seconds moyens de détection de courant $(2_1, 2_2)$ sont différentes et en ce que les moyens de détection de fréquence (AE) détectent sélectivement les seconde et troisième fréquences $(F_2, F_3)$.

26. Installation conforme à l'une des revendications 1 à 25, caractérisée en ce que les moyens de détection des fréquences comprennent l'écouteur du combiné d'un poste téléphonique.

27. Installation conforme à l'une des revendications 1 à 26, caractérisée en ce qu'elle comprend plusieurs quadripôles (B) insérés dans la ligne (L) dont les seuils de tension et/ou de courant sont respectivement différents.

28. Installation conforme à l'une des revendications 1 à 27, caractérisée en ce qu'elle comprend plusieurs quadripôles (B) insérés dans la ligne (L) dont les premières et/ou secondes et/ou troisièmes fréquences sont respectivement différentes.

**Claims**

1. Arrangement for locating breaks and short circuits with respect to a quadrupole (B) inserted between first and second sections (c-bc ; bi-i) of a line (L) having two leads $(L_1, L_2)$, the other end (c) of the first section being selectively connected to supplying means (AE) for selectively applying a voltage between the two leads greater than a first voltage threshold $(VS_1)$ and a current flowing in at least one of the leads greater than a first current threshold $(IS_1)$ and also being selectively connected to means (AE) for detecting first and second frequencies $(F_1, F_2)$, said quadrupole (B) comprising voltage detecting means (1) connected in parallel with the line leads $(L_1, L_2)$ for supplying to the line (L) a signal having the first frequency $(F_1)$ and modulating line current in response to said applied voltage and current detecting means (2) connected in series along one of the line leads $(L_1)$ for supplying to the line (L) a signal having the second frequency $(F_2)$ and modulating line current in response to said applied current, characterized in that the voltage detecting means (1) comprise first supply means (12) deriving a first voltage $(V_1)$ in response to said applied voltage, first means (13) for oscillating at the first frequency $(F_1)$ following the supply by the first supply means (12) and first means (11) connected in series with said first supply means (12) for modulating the current flowing through the voltage detecting means (1) with the first frequency signal $(F_1)$ delivered from the first oscillating means (13), and in that the current detecting means (2) comprise second supply means (22) deriving a second voltage $(V_1)$ in response to said applied current, second means (23) for oscillating at the second frequency $(F_2)$ following the supply by the second supply means (22) and second means (21) connected in parallel with the second supply means (22) for modulating the current flowing through the current detecting means (2) with the second frequency signal $(F_2)$ delivered from the second oscillating means (23).

2. Arrangement according to claim 1, characterized in that the first means (12) comprises a first Zener diode (121) which is interconnected to the supply terminals (130) of the first oscillating means (13) and series-connected with a first resistor (123).

3. Arrangement according to claim 1 or 2, characterized in that, after supply of the first oscillating means (13), the first supply means (12) control opening of a logic gate (132) to transfer the first frequency signal $(F_1)$ to the first current modulating means (11) in response to an applied voltage higher than a second voltage threshold $(VS_2)$, said first oscillating means (13) oscillating at the first frequency $(F_1)$ when the applied voltage is higher than the first voltage threshold $(VS_1)$ which is less than the second voltage threshold $(VS_2)$.

4. Arrangement according to claims 2 and 3, characterized in that the first supply means (12) comprise in series a second Zener diode (122) and a second resistor (124) that are connected in parallel with the first Zener diode and resistor (121, 123), and a simple diode (125) whose anode is connected to the anode of the second Zener diode (122) and to the control input (126) of the logic gate (133) and whose cathode is connected to the cathode of the first Zener diode (121).

5. Arrangement according to one of claims 1 to 4, characterized in that the first oscillating means comprise a multivibrator (132) designed to oscillate at said first frequency ($F_1$).

6. Arrangement according to one of claims 1 to 5, characterized in that the first modulating means (11) comprise a transistor (112) whose control electrode (G) receives the first frequency signal ($F_1$) and whose other two electrodes (D, S) short circuit a Zener diode (113) connected in series with the first supply means (12).

7. Arrangement according to claim 6, characterized in that said transistor (112) is an enhancement mode operation MOS transistor with a N-type conductivity channel.

8. Arrangement according to one of claims 1 to 7, characterized in that the output (131) of the first oscillating means (13) and the control input of the first current modulating means (11) are coupled by a capacitor or an optoelectronic coupler (14).

9. Arrangement according to one of claims 1 to 8, characterized in that the voltage detecting means (1) comprise Zener diodes (15) connected in series between their terminals ($10_+$, $10_-$).

10. Arrangement according to one of claims 1 to 9, characterized in that the voltage detecting means (1) comprise in series between their terminals ($10_+$, $10_-$) current limiting means with a predetermined current threshold (16).

11. Arrangement according to claim 10, characterized in that the current limiting means (16) comprise in series between their terminals ($120_-$, $10_-$) a resistor (161) and a Zener diode (162) which have a terminal connected to the control electrode of a transistor (160) whose other two electrodes are connected directly and across a resistor (163) to the terminals ($120_-$, $10_-$) of the current limiting means (16).

12. Arrangement according to one of claims 1 to 11, characterized in that the voltage detecting means (1) are inserted in the middle path of a rectifying diode bridge ($D_1$, $D_{22}$, $D_{21}$, $D_{12}$).

13. Arrangement according to one of claims 1 to 12, characterized in that the second supply means (22) comprise a third Zener diode (221) which is interconnected to the supply terminals (230) of the second oscillating means (23) and series-connected with a third resistor (223).

14. Arrangement according to claim 12 or 13, characterized in that, after supply of the second oscillating means (23), the second supply means (22) control opening of a second logic gate (233) to transfer the second frequency signal ($F_2$) to the second current modulating means (21) in response to an applied current higher than a second current threshold ($IS_2$), said second oscillating means (23) oscillating at the second frequency ($F_2$) when the applied current is higher than the first current threshold ($IS_1$) which is less than the second current threshold ($IS_2$).

15. Arrangement according to claims 13 and 14, characterized in that provided in the second supply means (22) in series are a fourth Zener diode (222) and a fourth resistor (224) that are connected in parallel with the third Zener diode and resistor (221, 223), and a simple diode (225) whose anode is connected to the anode of the fourth Zener diode (222) and to the control input (226) of the second logic gate (233) and whose cathode is connected to the cathode of the third Zener diode (221).

16. Arrangement according to one of claims 1 to 15, characterized in that the second oscillating means (23) comprise a multivibrator (232) designed to oscillate at said second frequency ($F_2$).

17. Arrangement according to one of claims 1 to 16, characterized in that the terminals (220) of the second supply means (22) are connected to the positive and negative terminals (20) of the current detecting means (2) through two diodes (217, 215) respectively.

18. Arrangement according to one of claims 1 to 17, characterized in that the second current modulating means (21) comprise a transistor (212) whose control electrode (G) receives the second frequency signal ($F_2$) and whose other two electrodes (D, S) shunts a resistor (213) between the terminals (20) of the current detecting means (2).

19. Arrangement according to claims 17 and 18, characterized in that the diode (215) which is connected to the negative terminal ($20_-$) of the current detecting means (2) is interconnected to the shunt resistor (213) and to the negative electrode of the transistor (212) in the second current modulating means (21).

20. Arrangement according to claim 18 or 19, characterised in that the transistor (212) in the second current modulating means (21) is an enhancement mode operation MOS transistor with a N-type conductivity channel.

21. Arrangement according to one of claims 18 to 20, characterized in that the second modulating means (21) comprise another resistor (216) series-connected with the shunt resistor (213) between the terminals (20) of the current detecting means (2).

22. Arrangement according to one of claims 1 to 21, characterized in that a positive temperature coefficient resistor (27) is inserted between the terminals ($20_+$, $20_-$) of the current detecting means (2).

23. Arrangement according to one of claims 18 to 21, characterized in that at least one of the resistors (213, 216) in the second current modulating means (21) is a positive temperature coefficient resistor.

24. Arrangement according to one of claims 1 to 23, characterized in that said quadrupole (B) comprises second current detecting means ($2_2$) connected in series along the other line lead ($L_2$) having components and a combination thereof analogous to ones in the first current detecting means ($2_1$) defined in one of claims 1 and 13 to 23.

25. Arrangement according to claim 24, characterized in that the frequencies ($F_2$, $F_3$) of signals delivered from the oscillating means (23) in the first and second current detecting means ($2_1$, $2_2$) are different and in that the frequency detecting means (AE) selectively detect the second and third frequencies ($F_2$, $F_3$).

26. Arrangement according to one of claims 1 to 25, characterized in that the frequency detecting means comprise the receiver of a telephone set.

27. Arrangement according to one of claims 1 to 26, characterized in that it comprises several quadrupoles (B) inserted in the line (L) whose voltage and/or current thresholds are different respectively.

28. Arrangement according to one of claims 1 to 27, characterized in that it comprises several quadrupoles (B) inserted in the line (L) whose first and/or second and/or third frequencies are different respectively.

**Ansprüche**

1. Einrichtung zur Fernortung von Unterbrechungen und Kurzschlüssen in einer Zweidrahtleitung, mit einem zwischen einer ersten und zweiten Strecke (c-bc, bi-i) der zwei Leiter ($L_1$, $L_2$) der Zweidrahtleitung (L) geschalteten Vierpol (B), wobei das Ende (c) der ersten Strecke wahlweise an Speiser (AE) angeschlossen ist, um eine zwischen den beiden Leitern befindliche Spannung, die höher als eine erste Spannungsschwelle ($VS_1$) ist, und einen wenigstens in einem der Leiter fließenden Strom, der höher als eine erste Stromschwelle ($IS_1$) ist, wahlweise anzuwenden, wobei sie, ebenfalls wahlweise, an Mittel (AE) angeschlossen ist, um erste und zweite Frequenzen ($F_1$, $F_2$) aufzuspüren, wobei der oben genannte Vierpol (B) zwischen den Leitungen ($L_1$, $L_2$) parallel geschaltete Spannungsanzeige-mittel (1) aufweist, um auf der Leitung (L) ein Signal an die erste Frequenz ($F_1$), die den Leitungsstrom als Antwort auf die genannte angewandte Spannung moduliert, zu senden, sowie auf einem der Leitungsleitern ($L_1$) seriengeschaltete Stromanzeige-mittel (2) aufweist, um auf der Leitung ($L_1$) ein Signal auf Leitung (L) an die zweite Frequenz ($F_2$), die den Leitungsstrom als Antwort auf den genannten angewandten Strom moduliert, zu senden, dadurch gekennzeichnet, daß die Spannungsanzeige-mittel (1) einen ersten Speiser (12) mit einer ersten Spannung ($V_1$) als Antwort auf die genannte angewandte Spannung vorsieht, sowie erste Oszillationsmittel (13), um bei der ersten Frequenz ($F_1$) als Folge der Versorgung durch die ersten Oszillationsmittel (13) zu schwingen, und daß die Stromanzeigemittel (2) ein zweites Versorgungsmittel (22) mit einer zweiten Spannung ($V_1$) auf den genannten angewandten Strom aufweist, sowie zusätzliche Schwingungsmittel (23), die als Folge der Versorgung durch die zusätzlichen Versorgungsmittel (22) bei der zweiten Frequenz ($F_2$) schwingen, sowie auch mit den zweiten Versorgungsmitteln (22) parallelgeschaltete zweite Mittel (21), um den durch die zweiten Stromanzeigemittel (2) fließende Strom mittels des durch die zweiten Oszillationsmittel (23) erzeugten Signals bei der zweiten Frequenz ($F_2$) zu modulieren.

2. Einrichtung nach Anspruch 1, dadurch gekennzeichnet, daß die ersten Versorgungsmittel (12) eine erste Zener-Diode (121) enthalten, die an die Speiser-Klemmen der ersten Oszillationsmittel (13) angeschlossen und mit einem ersten Widerstand (123) reihengeschaltet ist.

3. Einrichtung nach Anspruch 1 oder 2, dadurch gekennzeichnet, daß die ersten Versorgungsmittel (12) nach der Versorgung der ersten Oszillationsmittel (13) die Öffnung einer logischen Tür (133) steuern, um das Signal bei der ersten Frequenz ($F_1$) zu den ersten Strommodulationsmitteln (11) als Antwort auf eine höher als eine zweite Widerstandsschwelle ($VS_2$) liegende angewandte Spannung zu übertragen, wobei die erwähnten Oszillationsmittel (13) bei der ersten Frequenz schwingen, wenn die angewandte Spannung höher ist als die zweite Spannungsschwelle ($VS_1$), die niedriger liegt als die zweite Spannungsschwelle ($VS_2$).

4. Einrichtung nach den Ansprüchen 2 und 3, dadurch gekennzeichnet, daß die ersten Versorgungsmittel (12) aus einer reihengeschalteten Zener-Diode (122) und einem zweiten Widerstand (124) bestehen, die mit der ersten Zener-Diode und dem Widerstand (121, 123) parallelgeschaltet sind, und ferner eine einfache Diode (125) aufweisen, deren Anode mit der Anode der zweiten Zener-Diode (122) und dem Steuerungseingang (126) der logischen Tür (133) verbunden ist, und deren Kathode mit der Kathode der ersten Zener-Diode (121) verbunden ist.

5. Einrichtung nach einem der Ansprüche 1 bis 4, dadurch gekennzeichnet, daß die ersten Oszillationsmittel (13) einen Mehrzweck-Oszillator (132) haben, der bei der genannten ersten Frequenz ($F_1$) schwingt.

6. Einrichtung nach einem der Ansprüche 1 bis 5, dadurch gekennzeichnet, daß die ersten Strommodulationsmittel (11) einen Transistor (112) haben, dessen Steuerungselektrode (G) das Signal bei der ersten Frequenz ($F_1$) empfängt, während seine beiden anderen Elektroden (D, S) eine mit den ersten Versorgungsmitteln (12) reihengeschaltete Zener-Diode (113) kurzschließen.

7. Einrichtung nach Anspruch 6, dadurch gekennzeichnet, daß der genannte Transistor (112) ein MOS-Anreicherungs- und ein N-Typ-Leitfähigkeitskanal-Transistor ist.

8. Einrichtung nach einem der Ansprüche 1 bis 7, dadurch gekennzeichnet, daß der Ausgang (131) der ersten Oszillationsmittel (13) und der Steuerungseingang der ersten Strommodulationsmittel (11) durch einen Kondensator oder einen optisch-elektronischen Koppler gekoppelt sind.

9. Einrichtung nach einem der Ansprüche 1 bis 8, dadurch gekennzeichnet, daß der Spannungsdetektor (1) einige zwischen den Klemmen ($10_+$, $10_-$) reihengeschaltete Zener-Dioden aufweist.

10. Einrichtung nach einem der Ansprüche 1 bis 9, dadurch gekennzeichnet, daß der Spannungsdetektor (1) der zwischen den Klemmen (10$_+$, 10$_-$) reihengeschaltet ist, eine Strombegrenzungseinrichtung bei einer vorbestimmten Stromschwelle (16) hat.

11. Einrichtung nach Anspruch 10, dadurch gekennzeichnet, daß der Strombegrenzer (16), der zwischen den Klemmen (120$_-$, 10$_-$) reihengeschaltet ist, einen Widerstand (161) und eine Zener-Diode (162) aufweist, die mit einer Klemme an die Steuerungselektrode eines Transistors angeschlossen sind, dessen beide anderen Elektroden unmittelbar und mittels eines Widerstandes (163) an die Klemmen (120$_-$, 10$_-$) des Strombegrenzers (16) angeschlossen sind.

12. Einrichtung nach einem der Ansprüche 1 bis 11, dadurch gekennzeichnet, daß der Spannungsdetektor (1) in die mittlere Strecke einer Dioden-Gleichrichter-Verbindung (D$_{11}$, D$_{22}$, D$_{21}$, D$_{12}$) eingeschaltet ist.

13. Einrichtung nach einem der Ansprüche 1 bis 12, dadurch gekennzeichnet, daß der zweite Speiser (22) eine dritte Zener-Diode (221) hat, die an die Speiser-Klemmen (230) des zweiten Oszillators (23) angeschlossen und mit einem dritten Widerstand (233) reihengeschaltet ist.

14. Einrichtung nach Anspruch 12 oder 13, dadurch gekennzeichnet, daß der zweite Speiser (22) als Antwort auf einen angewendeten höher als eine zweite Stromschwelle (IS$_2$) liegenden Strom nach der Speisung der zweiten Oszillationseinrichtung (23) die Öffnung einer zweiten logischen Tür (233) steuert, um das Signal bei der zweiten Frequenz (F$_2$) zur zweiten Strommodulationseinrichtung (21) zu übertragen, wobei die obengenannte zweite Oszillationseinrichtung (23) bei der zweiten Frequenz (F$_2$) schwingt, wenn der angewendete Strom höher liegt als die erste Stromschwelle (IS$_1$), die ihrerseits niedriger liegt als die zweite Stromschwelle (IS$_2$).

15. Einrichtung nach den Ansprüchen 13 bis 14, dadurch gekennzeichnet, daß in dem zweiten Speiser (22) eine vierte Zener-diode (222) und ein vierter Widerstand (224) reihengeschaltet vorgesehen sind, die mit der dritten Zener-Diode und dem Widerstand (221, 223) parallel geschaltet sind, sowie eine einfache Diode (225), deren Anode an die Anode der vierten Zener-Diode (222) und an den Steuerungseingang (226) der zweiten logischen Tür (233) angeschlossen ist, und deren Kathode an die Kathode der dritten Zener-Diode (221) angeschlossen ist.

16. Einrichtung nach einem der Ansprüche 1 bis 15, dadurch gekennzeichnet, daß die zweite Oszillationseinrichtung (23) einen Mehrzweck-Schwinger (232), der bei der obengenannten Frequenz (F$_2$) schwingt, hat.

17. Einrichtung nach einem der Ansprüche 1 bis 16, dadurch gekennzeichnet, daß die Klemmen (220) des zweiten Speisers (22) durch die beiden Dioden (217, 215) jeweils an die positive oder negative Klemme (20) der Stromanzeige-Einrichtung angeschlossen sind.

18. Einrichtung nach einem der Ansprüche 1 bis 17, dadurch gekennzeichnet, daß die zweiten Strommodulationsmittel (21) einen Transistor (212) aufweisen, dessen Steuerungselektrode (G) das Signal bei der zweiten Frequenz (F$_2$) empfängt und dessen beide anderen Elektroden (D, S) einen Widerstand (213) zwischen den Klemmen (20) der Stromanzeige-Einrichtung (2) kurzschließen.

19. Einrichtung nach den Ansprüchen 17 und 18, dadurch gekennzeichnet, daß die an die Negativ-Klemme (20) der Stromanzeige-Einrichtung (2) angeschlossene Diode (215) mit dem Kurzschlußkreis-Widerstand (213) und dem Transistor (212) der zweiten Strommodulations-Einrichtung (21) gekoppelt ist.

20. Einrichtung nach Anspruch 18 oder 19, dadurch gekennzeichnet, daß der Transistor (212) der zweiten Strommodulations-Einrichtung (21) ein mit einem Leitfähigkeitskanal vom Typ N versehener MOS-Anreicherungs-Transistor ist.

21. Einrichtung nach einem der Ansprüche 18 bis 20, dadurch gekennzeichnet, daß die zweite Strommodulations-Einrichtung (21) einen weiteren Widerstand (216) besitzt, der mit dem Kurzschluß-Kreis-Widerstand (213) zwischen den Klemmen (20) der Stromanzeige-Einrichtung (2) reihengeschaltet ist.

22. Einrichtung nach einem der Ansprüche 1 bis 21, dadurch gekennzeichnet, daß ein mit positivem Temperatur-Koeffizient versehener Widerstand (27) zwischen die Klemmen (20$_+$, 20$_-$) der Stromanzeige-Einrichtung (2) geschaltet ist.

23. Einrichtung nach einem der Ansprüche 18 bis 21, dadurch gekennzeichnet, daß wenigstens einer der Widerstände (213, 216) der Strommodulations-Einrichtung (21) ein mit positivem Temperatur-Koeffizient versehener Widerstand ist.

24. Einrichtung nach einem der Ansprüche 1 bis 23, dadurch gekennzeichnet, daß der obengenannte Vierpol (B) die zweite Stromanzeige-Einrichtung (2$_2$) enthält, der auf dem anderen Leitungs-Leiter (L$_2$) reihengeschaltet ist, dessen Bestandteile und Wartung mit der ersten Stromanzeige-Einrichtung (2$_1$), übereinstimmen.

25. Einrichtung nach Anspruch 24, dadurch gekennzeichnet, daß die Frequenzen (F$_2$, F$_3$) der duch die Oszillations-Einrichtung (23) der ersten und zweiten Stromanzeige-Einrichtung (2$_1$, 2$_2$) gelieferten Signale verschieden sind, und daß die Frequenzanzeige-Einrichtung (AE) wahlweise die zweite und dritte Frequenz (F$_2$, F$_3$) anzeigt.

26. Einrichtung nach einem der Ansprüche 1 bis 25, dadurch gekennzeichnet, daß die Frequenzanzeige-Einrichtung den Hörer einer Fernsprecheinrichtung umfaßt.

27. Einrichtung nach einem der Ansprüche 1 bis 26, dadurch gekennzeichnet, daß die Einrichtung mehrere Vierpole (B) umfaßt, die in die Leitung (L) eingeschaltet sind, deren Spannungs- und/oder Stromschwellen jeweils verschieden sind.

28. Einrichtung nach einem der Ansprüche 1 bis 27, dadurch gekennzeichnet, daß die Einrichtung mehrere Vierpole (B) umfaßt, die in die Leitung (L) eingeschaltet sind, deren erste und/oder zweite und/oder dritte Frequenzen jeweils verschieden sind.

# FIG.1

**CT**

CENTRAL TELEPHONIQUE

CC

premier tronçon de ligne L

$L_1$  $C_1$

$L_2$  $C_2$

$bc_1$

$bc_2$

**B**

BALISE $(F_1, F_2, F_3)$ (FIG.2)

$bi_1$

$bi_2$

second tronçon de ligne L

$L_1$

$L_2$

$i_1$

$i_2$

**I**

INSTALLATION TELEPHONIQUE D'ABONNÉ

APPAREIL D'ESSAI (ALIMENTATIONS $V_{lc}$, $I_{lc}$ ET DETECTEURS DE FREQUENCES) — **AE**

# FIG.2

**B**

BALISE

$L_1$

$bc_1$

$D_{11}$

$10+$

CIRCUIT DE DETECTION DE TENSION $(F_1)$ (FIG.3)  **1**

$D_{22}$

$10-$

$D_{21}$

$D_{12}$

$bc_2$

$L_2$

$20+$

CIRCUIT DE DETECTION DE COURANT $(F_2)$ (FIG.4)  **$2_1$**

$20-$  $bi_1$

$L_1$

**$2_2$**

$20-$

CIRCUIT DE DETECTION DE COURANT $(F_3)$ (FIG.4)

$20+$  $bi_2$

$L_2$

0 056 545

# FIG.3

CIRCUIT A SEUIL
DE TENSION

CIRCUIT D'AMPLIFICATION
ET DE MODULATION
DE COURANT

CIRCUIT A LIMITATION
ET A SEUIL
DE TENSION $V_1$, $V_2$

CIRCUIT DE LIMITATION
DE COURANT

GÉNÉRATEUR $F_1$

CIRCUIT
DE DÉTECTION
DE TENSION

0 056 545

# FIG.4

27

CIRCUIT D'EXTRACTION VOLTMETRIQUE
DU COURANT DE LIGNE,
D'AMPLIFICATION ET DE
MODULATION DE CE COURANT

20+   216   213   20−

217   215

21

D   S

212   G

220+   220−

CIRCUIT A LIMITATION ET A
SEUIL DE TENSION $V_1$, $V_2$

$I_1 < I_2$

223   221($V_1$)   22

222($V_2$)   225

226   224

230+   230−

2

CIRCUIT DE
DETECTION
DE COURANT

233

231   234

23

232

GENERATEUR $F_2$ ou $F_3$

3